# EUROPEAN PATENT APPLICATION

(11) **EP 0 614 308 A1**
(43) Date of publication of application: **07.09.1994**
(21) Application number: 94102910.0
(22) Date of filing: 25.02.1994
(51) Int. Cl.: H04N 1/44

(54) **Method and apparatus for controlling access to selected image components in an image storage and retrieval system**

(30) Priority: 05.03.1993 US 26726
(71) Applicant: EASTMAN KODAK COMPANY, Rochester, New York 14650-2201 (US)
(72) Inventor: Melnychuck, Paul Walter, c/o EASTMAN KODAK COMPANY, Rochester, New York 14650-2201 (US)
(74) Representative: Wagner, Karl H., Dipl.-Ing.

(57) **Abstract**

An image processing technique is described in the context of a hierarchical image storage and retrieval system. The method allows for the restriction of access to selected high resolution image components in the hierarchy from unauthorized use. The technique employs a key encryption of selected image components during storage, and decryption with a special key, or password during authorized retrieval. This technique allows users of a distributed system the convenience of providing the entire image hierarchy on a single storage medium. Access to the low resolution components is permitted without restriction for browsing and proofing.

## Description

### Technical field Of The Invention

The present invention is related to the field of digital image processing and more particularly to methods and associated apparatuses for preventing the unauthorized use of stored digital image components.

### Background Of The Invention

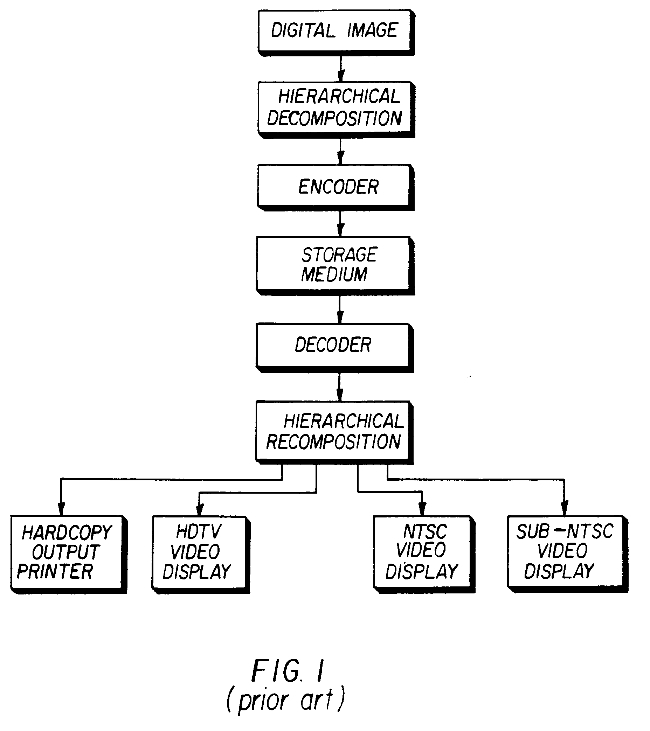

An image hierarchy is constructed in the context of a multiresolution environment whereby the user has the option of selecting the type of display medium and the desired resolution of this display medium. In particular, two types of display media are considered: video monitors and color hard copies, through photographic, thermal imaging, and other types are also of interest. In Fig. 1 a prior art technique for decomposing, storing, recomposing, and displaying, a digital image using a hierarchical process is shown. An original digital image is decomposed to provide image versions at various resolutions to allow for the display of an HDTV quality image on video, an NTSC quality image with PAL/SECAM compatibility on video, one or more sub-NTSC quality images on video for overviews and browsing, and a very high quality image on color hard copy. Intermediate the decomposition and recomposition steps, generally are inserted an encoding step, to compress the data for storage which in turn requires a decoding step prior to further usage.

The present invention uses encryption of selected image components of the image hierarchy to prevent use of the selected components for the generation of unauthorized high quality color hard copy. Encryption is a form of scrambling of the digital data to prevent use of the data by an unauthorized receiver of the data. In a distributed image system it is common to deliver an image of compromised image quality for purposes of browsing or proofing. A compromised rendition of the image is commonly distributed to prevent full utility or fulfillment of the image without proper consideration for the service that generated the image. The term browsing refers to the process of image selection from a plurality of images based on some user-defined criterion. Such is the case when a user may select an image from a catalog of images depicting a particular object. The term proofing refers to the process of image selection based on the degree of desirability of a given image from a plurality of images. Such is the case when a professional portrait photographer distributes a plurality of images to the client for selection and approval. The terms browsing and proofing described herein are not limited to the examples described above.

It is desirable for the person performing a photographic service, most often a professional photographer or service bureau, herein after referred to as the professional, to release a compromised rendition of the image to the client for browsing or proofing. A compromised rendition of the proof is given to the client to prevent the client from obtaining a high quality copy of the proof through other means, without paying the photographer or service bureau a premium for such service. Upon selection of the desired image by the client, the professional delivers a high quality rendition of the image, most often in the form of a high quality color hard copy. At all times the professional possesses the sole means of generating the high quality hard copy. In a conventional photographic system the means would be the original negatives of the images; in a digital hierarchical system according to the present invention, the means are higher resolution residual components.

In a digital imaging system, and in particular one that includes a hierarchical form of digital storage and retrieval, the professional may use a suitable digital storage medium for the distribution of proofs. In an unrestricted environment, the client may choose a desired image resolution from the hierarchy for the purposes of browsing, proofing, or hard copy fulfillment. It is desirable for the professional to deliver the digital storage medium containing the entire image hierarchy to the client; it is also most economical to record the entire image hierarchy once onto the digital storage medium and avoid having to make a second copy containing only low resolution components for distribution. However, it is desirable to the professional to restrict the use of selected high resolution components for the purpose of full image quality fulfillment. Note that fulfillment may mean high quality video at NTSC/PAL/SECAM, HDTV, or hard copy. The client, having possession of the digital storage medium would possess the means for generating his/her own high quality hard copy through authorization from the professional. Upon consideration to the professional, the professional would provide the information necessary for full image quality fulfillment. In the present invention that information would be an authorization code, key, or password that would be input to the image processing system, to unlock the restricted high resolution components. An advantage of this technique is that the client may possess all information pertinent to generating high quality hard copy without the need to physically return to the professional for additional image components.

It is additionally desirable to use some form of image hierarchical structure of the image for the purpose of browsing or proofing in a distributed system because the hierarchy naturally provides a plurality of resolutions, and hence levels of image quality, from which to choose the proof image. No additional operation of compromising the image is necessary; the professional simply chooses at what resolution level(s) he wants to restrict access.

Systems that use a hierarchical structuring of the image data have not been employed in the past for distribution purposes because of the lack of means to simultaneously provide low resolution components for browsing and proofing, while offering restricted access to the remaining hierarchical components for full quality image copy.

A number of hierarchical techniques for image coding have been described in the open technical literature and in various patents. Of particular relevance to the present invention are the following publications:

P. J. Burt and E. H. Adelson, "The Laplacian Pyramid As A Compact Code," IEEE Trans. Comm., COM-31, 532-540 (1983).

W. Ford and B. O'Higgins, "Public-Key Cryptography And Open Systems Interconnection," IEEE Comm. Mag. 30-34, July 1992.

G. Brassard, "Modern Cryptology: A Tutorial," Lecture Notes In Computer Science 325, Springer-Verlag, 1988.

C. H. Meyer and S. M. Matyas, "Cryptography: A New Dimension In Computer Data Security," J. Wiley & Sons, 1982. and the following patents:
U.S. Pat No, 4,969,204 entitled "Hybrid Residual-Based Hierarchical Storage And Display Method For High Resolution Digital Images In A Multiuse Environment," by Paul W. Melnychuck and Paul W. Jones, 1990.

U.S. Pat No, 5,048,111 entitled "Hybrid Subband-Based Hierarchical Storage And Display Method For High Resolution Digital Images In A Multiuse Environment," by Paul W. Jones and Paul W. Melnychuck, 1991.

The publication by Burt, et al. teaches an encoding method for images termed the Laplacian pyramid, the Burt pyramid, or the residual pyramid. In this technique, the original image is lowpass filtered, and this lowpass image is subsampled to take advantage of its reduced bandwidth to provide an image of reduced dimension. This process of lowpass filtering and subsampling is repeated three times to generate a hierarchical structure, or pyramid of images of successively smaller dimensions. The total number of resolution levels are created depending on the application. Each lowpass image in this pyramid is then expanded to the dimensions of the next higher level by upsampling (inserting zeros) and filtering to form a prediction image for that level. This prediction image is subtracted from its corresponding lowpass image in a subtractor to generate difference, or residual, images. The residual images corresponding to the levels of the lowpass pyramid form another pyramid which is termed the Laplacian, Burt, or residual pyramid. This technique is motivated by the fact that the residual images have a reduced variance and entropy compared to the original or lowpass images and may be quantized and entropy encoded to provide efficient storage of the data. Reconstruction is performed by interpolating the decoded lowpass image at the bottom of the lowpass pyramid and adding in the corresponding decoded residual to generate the next level in the lowpass pyramid. This process is iterated until the original image size is reached. A progressive improvement in reconstructed image quality and resolution can thus be obtained by displaying the reconstructed lowpass filtered image at each level of the pyramid. Note that errors introduced in the encoding process are propagated from one level to the next higher level in the decoding process.

The patent to Melnychuck and Jones (U. S. Pat. No. 4,969,204) teaches a modification of the Burt pyramid scheme by extending the lowpass pyramid structure to include one or more lowpass filtered images of successively smaller dimensions beyond the set described by Burt, et al. The advancement in the method of Melnychuck and Jones is that the residual pyramid is not extended to include these corresponding extended smaller dimensions. Hence, the Melnychuck and Jones pyramid contains the Burt pyramid plus additional lowpass filtered images of smaller dimensions. In a hierarchical image storage and retrieval system, the additional lowpass filtered images of smaller dimension can be retrieved directly, without interpolation and addition of residual components. In the context of the present invention, the Melnychuck and Jones pyramid provides for low resolution images that can be used for browsing or proofing. The use of these additional low resolution images for browsing and proofing means that the client may use a simple retrieval mechanism and need not possess a more complex and hence, more expensive retrieval device that would be used to decode the higher resolution components of the pyramid. Of course, higher resolution images requiring interpolation and residual addition may be used for browsing and proofing as well.

The patent to Jones and Melnychuck (U. S. Pat. No. 5,048,111) teaches a hierarchical storage and retrieval method based on subband decomposition.

The prior art in the open technical literature cited earlier contains several methods of encryption that may be applied to one or more of the high resolution residual components. Generally there exists two broad methods of encryption that are relevant to the present invention: symmetric and public-key. Both encrypt the data using computer algorithms, and provide users' restriction through the use of passwords or keys. The difference between the two techniques lies in the way the keys are used.

A symmetric encryption system has a single key, which is used to both encrypt and decrypt the data. The algorithm is a mathematical process that transforms the data into some form of scrambled cipher data and back again, with the transformation depending on the value of the key. This system is adequate for a small number of communicating parties. However, it may become impractical to share the key knowledge and maintain secrecy as the number of communicating parties grow.

For a larger number of communicating parties a public-key encryption process may be more appropriate. This type of system uses complementary pairs of keys to separate the functions of encryption and decryption. One key in a pair, the private key is kept secret to the originator, just as in the symmetric encryption system; but the other key is made public. This is not a drawback, because even if the public key is known, it is not possible to determine the private key. This two-key approach greatly simplifies key management by eliminating the need to manage and store astronomical numbers of keys, and by enabling keys to be distributed via unrestricted systems such as public distribution systems.

The present invention combines the Melnychuck and Jones pyramid structure with prior art encryption methods, to provide a combined hierarchical image storage and retrieval system with encryption of selected high resolution residual components.

### Summary Of The Invention

In one embodiment of the invention there is provided a storage medium having stored therein at least one low resolution digital image and at least one high resolution digital image, with said low resolution digital image being accessible without the use of a key and with said high resolution digital image being accessible only with a key.

In another embodiment of the invention there is provided a method for controlling the access to a digital image stored on a storage medium in a hierarchical form comprised of a BASE image and at least one residual image component, comprising the steps of:
a) encrypting said at least one residual image component with a code key;
b) permitting access to the BASE image for low resolution viewing of the digital image;
c) controllably providing a decode key to an authorized viewer to enable accessing of the at least one residual image component; and
d) combining the BASE image with the at least one residual component to form the digital image for viewing, printing and/or storing.

In yet another embodiment of the invention there is provided a system for controlling the reconstruction of a high resolution digital image stored on a storage medium as BASE and residual components, comprising:
means for encrypting the residual components stored on said storage medium using a code key;
means for accessing the BASE and encrypted residual components;
means requiring the code key to decrypt the encrypted residual components; and
means for combining the accessed BASE and decrypted residual components to reconstruct the high resolution digital image.

The present invention uses the advantages of hierarchical image decomposition to create a series of residual components and low resolution images. The low resolution images are viewable without constraint, but the reconstruction of higher resolution images is controlled by requiring that a user know a key code, generally provided by the encryptor, that controls access to the residual components that must be combined with selected low resolution image to produce the higher resolution images.

From the foregoing, it can be seen that it is a primary object of the present invention to provide a method and associated apparatus for storing and controllably retrieving digital images stored in a hierarchical format on a suitable digital storage distribution medium that allows the originator of the distribution medium to distribute the medium containing the entire image hierarchy for the purpose of retrieving low resolution images for browsing or proofing without compromising the originator's need to withhold the means to create full image quality hard copies.

It is another object of the present invention to provide low resolution images, for browsing or proofing, in a form that allows for direct retrieval and display, without the need for additional recomposition steps as is required for high resolution residual components while controlling access to the high resolution residual components.

It is another object of the present invention to provide the means for controlling access to high resolution residual components stored in a storage media.

It is another object of the present invention to provide a storage media having stored therein one or more digital images, stored in a hierarchical format along with a control key that controls the users access to one or more of the hierarchical formats of the digital images.

The above and other objects of the present invention will become more apparent when taken in conjunction with the following description and drawings wherein like characters indicate like parts and which drawings form a part of the present description.

### Brief Description Of The Drawings

Fig. 1 is a block diagram illustrating the prior art Melnychuck and Jones hierarchical storage and display method.

Fig. 2 is a block diagram illustrating a hierarchical image decomposition system incorporating key encryption for selected image components.

Fig. 3 is a block diagram illustrating a reconstruction system for reconstructing the images decomposed by the system of Fig. 2.

Fig. 4 is a detailed block diagram of the decomposition apparatus 100, shown in Figure 2 decomposition method.

Fig. 5 is a detailed block diagram of the reconstruction apparatus 200, shown in Figure 3.

Fig. 6 is a detailed block diagram of the encryption portion of the system of Figure 2.

Fig. 7 is a detailed block diagram of the decryption portion of the system of Figure 3.

### Description Of The Preferred Embodiments

In the following description of the preferred embodiments, it will be assumed that the highest resolution of the image hierarchy is composed of 3072 x 2048 pixels and that this resolution is adequate to produce photographic quality originals on an appropriate digital output device. It is also assumed that a moderately high resolution level of the hierarchy composed of 1536 x 1024 pixels is adequate to generate a high quality HDTV display, or a small-sized photographic quality print on an appropriate digital output device. It is also assumed that the lowest resolution levels of 192 x 128 pixels, 384 x 256 pixels, and 768 x 512 pixels are generated and stored directly onto a digital storage medium according to the Melnychuck and Jones pyramid structure and that these resolutions are adequate for image browsing and proofing. These resolution levels are provided to give the reader an insight as to the operation of one or more embodiments of the invention with the understanding that other resolutions or arrangements may be chosen to suit specific needs without detracting from the teachings of the present invention.

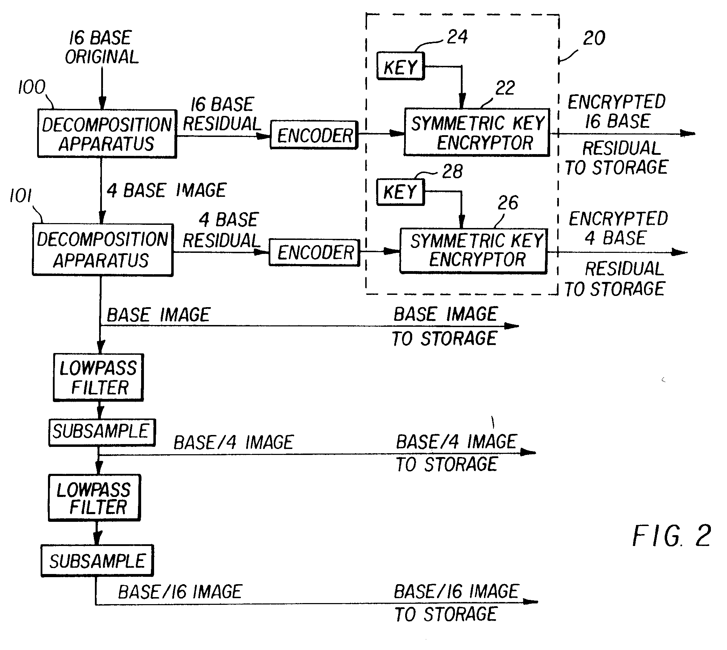

Referring now to Fig. 2, a hierarchical residual decomposition technique, for decomposing a 16BASE original image to from a, 16BASE residual, 4BASE residual, BASE, BASE/4, and BASE/16, images, incorporating the teachings found in Fig. 1 of the patent to Melnychuck and Jones (U. S. Pat. No. 4,969,204), is shown outside of the outlined box 20. The encoded 16BASE residual image (component) is passed through a key encriptor 22 controlled by a key 24. In the preferred embodiment of the invention the key should contain a sufficient number of numbers, symbols and/or letters to make trying all of the possible combinations restrictive. The output from encryptor 22 is an encrypted 16BASE compressed residual image that is storable on a storage medium, such as a CD disk. In a like manner, the 4BASE residual image is encoded and forwarded to a symmetric key encryptor 26 that is controlled by the key 28. Symmetric key encryptors 22 and 26 may be identical in construction, but this is not required. In a like manner, keys 24 and 28 may be identical, but this also is not required. The encrypted 4BASE residual image is likewise stored on the storage medium. The BASE, BASE/4, and BASE/16 images are formed by low pass filtering and subsampling the BASE image and the BASE/4 image and also stored on the storage medium.

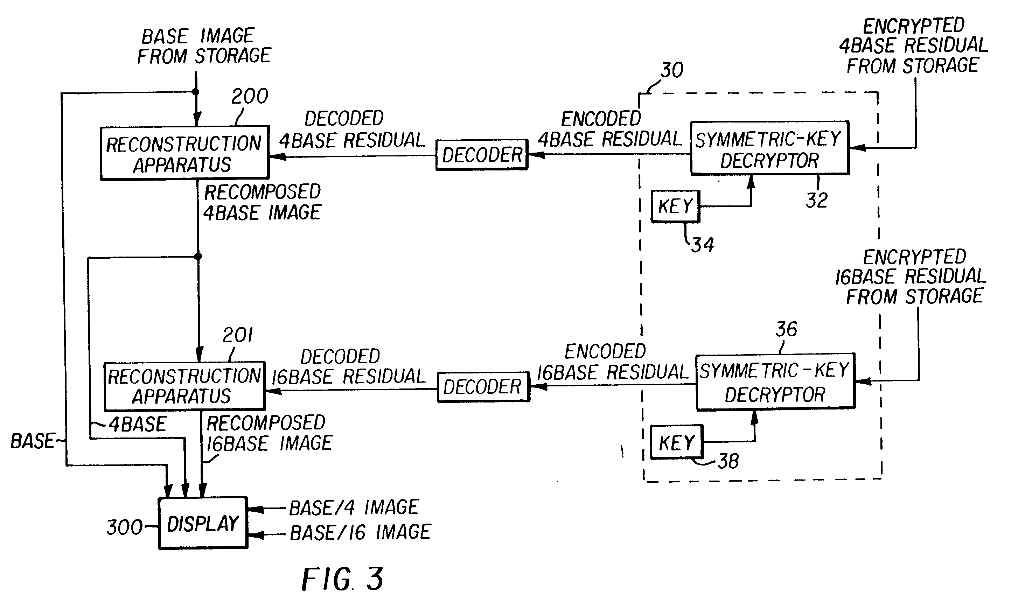

A reconstruction technique that can be used to recompose the images decomposed by the technique of Fig. 2 and stored on the storage medium is disclosed in Fig. 3. The BASE/16, and BASE/4 images may be retrieved from the digital storage medium and made available for use such as a viewing on a display device 300. To be noted is that these images were not encoded prior to storage on the storage medium, therefore they do not have to be decoded prior to being sent to the display device 300. In a proofing mode these images can be viewed by the customer at home using a CD player, without knowledge of the key code. A reconstruction apparatus 200, illustrated in Fig. 2 of the patent to Melnychuck and Jones (U. S. Pat. No. 4,969,204) is used to form, from the BASE image accessed from the storage medium a prediction image that is combined with a decoded 4BASE residual, also retrieved from the storage medium, to form a recomposed 4BASE image. The recomposed 4BASE image may then be displayed on the display device 300 or it may be further processed if the higher resolution 16BASE image is desired. If such is the case, the reconstructed 4BASE image is subjected once more to a reconstruction apparatus 201 to form a prediction image that is combined with a decoded 16BASE residual image, retrieved from the digital storage medium, to form the recomposed 16BASE image. The previous discussion assumed that the encoded 4BASE residual image and/or the encoded 16BASE residual image were readable from the recording medium due to the correct keys 34 and 38 being applied to the associated symmetric-key decryptors 32 and 36. If the correct key combination were not applied these encoded residual images would not be available thereby preventing the reconstruction of the 4BASE and/or the 16BASE images. Although a display device 300 is shown receiving the higher resolution images it is to be understood that a hard copy may be desired. Such being the case a printer capable of printing high resolution images would also receive the 4BASE and/or 16BASE images. Although a display device 300 is shown receiving the higher resolution images it is to be understood that a hard copy may be desired. Such being the case, a printer capable of printing high resolution images would also receive the 4BASE and/or 16BASE images.

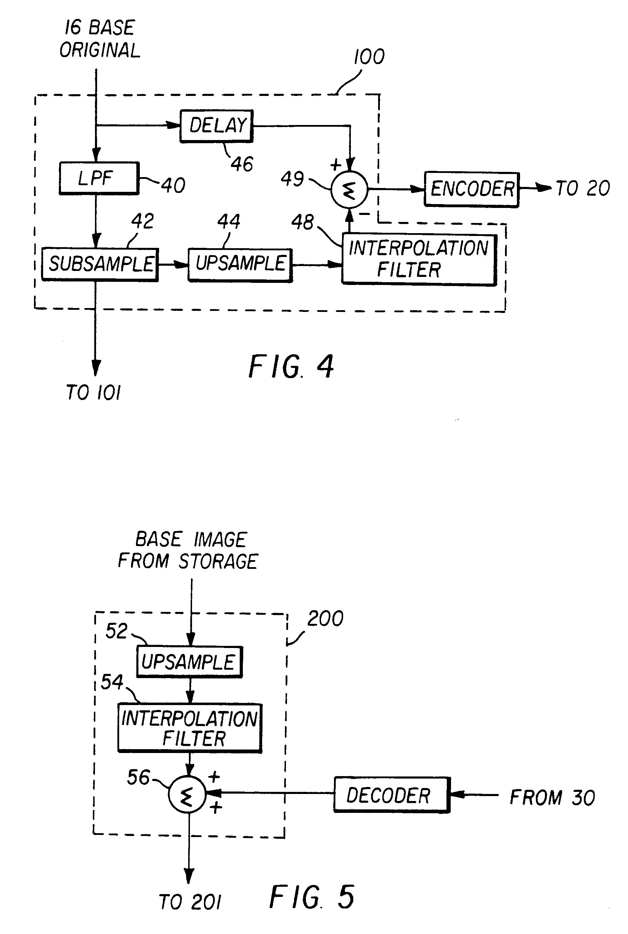

Fig. 4 illustrates the structural arrangement of the decomposition apparatus 100 of Fig. 2. The 16BASE image is low pass filtered in LPF 40 and delayed in delay 46. The lowpass filtered image is subsampled to take advantage of its reduced bandwidth to provide the 4BASE image that is forwarded to the decomposition apparatus 101, which may be identical in construction to decomposition apparatus 100. The lowpass image is upsampled in 44 to expand it to the dimensions of the next higher level (in this case the 16BASE original image by inserting zeros) and interpolation filtered in 48 to form a prediction image. The prediction image is subtracted from its corresponding original image in subtractor 49 to provide a difference, or residual image. The residual image is then optionally compressed in an encoder to save storage space and forwarded to the key encryptor 20.

In Fig. 5 the key decrypted residual image from decryptor 30 is decoded (decompressed) if it was compressed during the storage process and combined in the summer 56 with the BASE image that has also been accessed from the storage medium. Prior to being combined the BASE image is upsampled in 52 and passed through an interpolation filter 54 to form a prediction image representing the 4BASE image. The combination provides the 4BASE image which is then forwarded to the reconstruction apparatus 201 which may be identical to the reconstruction apparatus 200, for generation of the 16BASE original image.

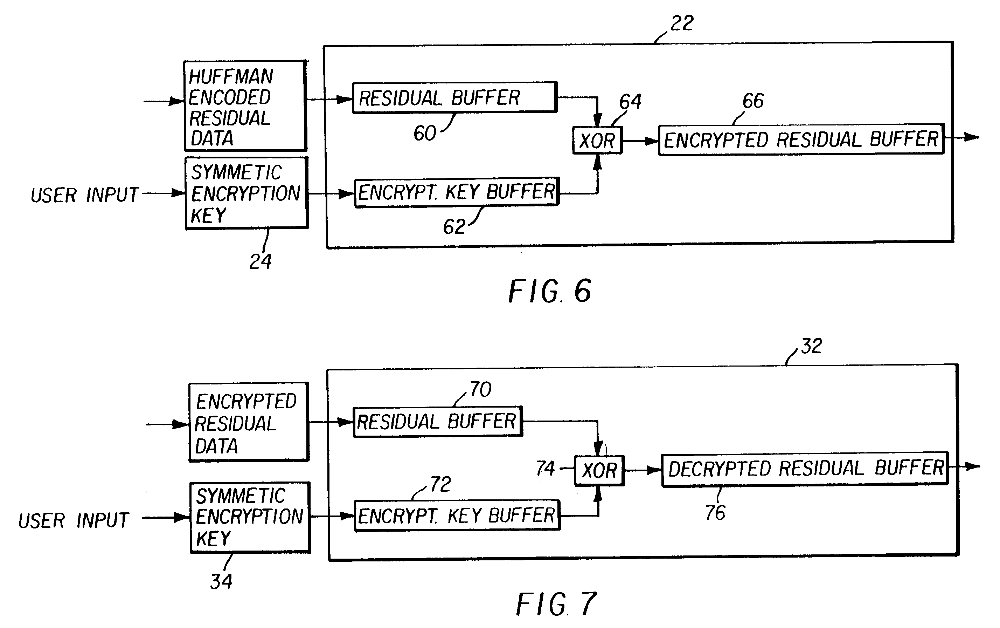

Fig. 6 illustrates the details of one type of key encryptor that may be used to encrypt the residual image. The huffman encoded residual data is directed to the input of a residual buffer 60. The encryption key 24 is forwarded to an encryption key buffer 62. The outputs of buffers 60 and 62 are combined in a logical XOR circuit 64 and directed to an encrypted residual buffer 66 for temporary storage until ready for storage in the storage medium. Key encryptor 26 may be identical to key encryptor 22.

Fig. 7 illustrates the details of one type of key decryptor 32 that may be used to decrypt the encrypted residual image accessed from the storage medium. The accessed encrypted residual data is directed to a residual buffer 70 while the encryption key is directed to an encryption key buffer 72. The outputs from buffers 70 and 72 are logically XOR'ed in 74 and forwarded to a decryption residual buffer 76 for temporary storage until ready for recombination with one of the predicted higher resolution images.

While there has been shown what are considered to be the preferred embodiments of the invention, it will be manifest that many changes and modifications may be made therein without departing from the essential spirit of the invention. It is intended, therefore, in the annexed claims, to cover all such changes and modifications as may fall within the scope of the invention.

### Parts List:

- 20: Key encriptor
- 22: Symmetric key encryptor
- 24: Encryption key
- 26: Symmetric key encryptor
- 28: Key
- 30: Decryptor
- 32: Symmetric key decryptor
- 34: Key
- 36: Symmetric-key decryptor
- 38: Key
- 40: LPT
- 42: Subsample
- 44: Unsample
- 46: Delay
- 48: Interpolation filter
- 49: Subtractor
- 52: Unsample
- 54: Interpolation filter
- 56: Summer
- 60: Residual buffer
- 62: Encrypt. key buffer
- 64: XOR circuit
- 66: Encrypted residual buffer
- 70: Residual buffer
- 72: Encrypt. key buffer
- 74: XOR
- 76: Decrypted residual buffer
- 100: Decomposition apparatus
- 101: Decomposition apparatus
- 200: Reconstruction apparatus
- 201: Reconstruction apparatus
- 300: Display device

## Claims

1. A storage medium having stored therein at least one low resolution digital image and at least one high resolution digital image, with said low resolution digital image being accessible without the use of a key and with said high resolution digital image being accessible only with a key.

2. The storage medium according to claim 1 wherein said at least one high resolution digital image is encrypted and the key permits decryption of said at least one high resolution digital image.

3. A storage medium having stored therein at least one low resolution digital image and at least one high resolution digital image in the form of a BASE image and residual image components, with said low resolution digital image and said BASE image being accessible without the use of a key and with said high resolution digital image being accessible only by combining the BASE image with said residual image components under control of the key.

4. The storage medium according to claim 3 wherein the key controls access to one or more of the residual image components.

5. A system for controlling the reconstruction of a high resolution digital image stored on a storage medium as BASE and residual components, comprising:
means for encrypting the residual components stored on said storage medium using a code key;
means for accessing the BASE and encrypted residual components;
means requiring the code key to decrypt the encrypted residual components; and
means for combining the accessed BASE and decrypted residual components to reconstruct the high resolution digital image.

6. A system for encrypting and decrypting a high resolution digital image comprising:
means for forming a hierarchy of lower resolution digital images from the high resolution digital image;
means for forming residual images that are a function of differences between adjacent images in the hierarchy of lower resolution digital images;
encryption means for encrypting at least one of the formed residual images;
storage means for storing the formed hierarchy of lower resolution images and the at least one encrypted residual images;
means for reconstructing high resolution images by accessing and combining a lower resolution image with a residual image;
means for controlling the decryption of the at least one encrypted residual image to in turn control the reconstruction of the high resolution image.

7. A recording medium having stored thereon a plurality of digital images with each of the digital images being comprised of low resolution digital image components and key encrypted residual digital image components which are combinable with low resolution digital image components to form a higher resolution digital image when accessed with a decryption key.

8. A method for controlling the access to a digital image stored on a storage medium in a hierarchical form comprised of a BASE image and at least one residual image component, comprising the steps of:
a) encrypting said at least one residual image component with a code key;
b) permitting access to the BASE image for low resolution viewing of the digital image;
c) controllably providing a decode key to an authorized viewer to enable accessing of the at least one residual image component; and
d) combining the BASE image with the at least one residual component to form the digital image for viewing, printing and/or storing.

9. A hierarchical image storage and encryption method comprising the steps of:
(a) forming a digital representation of an image;
(b) decomposing said digital representation according to the following steps:
i. lowpass filtering and subsampling said digital representation to form a lower resolution image;
ii. interpolating said lower resolution image to the dimensions of the digital representation to form a prediction image;
iii. subtracting said prediction image from the digital representation to form a residual image;
iv. key encoding and storing said residual image; and
v. creating a plurality of key encoded, and stored residual images of different resolutions by iterating steps i, ii, iii, and iv where the input to the lowpass filtering and subsampling operation of step i is the lower resolution image formed in the previous iteration step i and storing at least one of the formed lower resolution images.

10. A method for reforming the digital image representations encrypted according to the method of claim 9.
A) accessing and interpolating at least one of the formed and stored lower resolution images to the dimensions of a next higher resolution level to form a prediction image;
B) retrieving and key decoding at least one of said stored key encoded residual images;
C) adding said key decoded residual image to said prediction image to form a higher resolution image for further use; and
D) iterating steps A through C for each user selected remaining residual image of step (b.iv).

11. A hierarchical image storage and encryption method comprising the steps of:
(a) forming a digital representation of an image;
(b) decomposing said digital representation according to the following steps:
i. filtering and subsampling said digital representation to form a lower resolution image of said digital representation;
ii. forming a prediction image of said digital representation from said lower resolution image;
iii. subtracting said prediction image from said digital representation to form a residual image;
iv. key encrypting, and storing said residual image; and
v. creating a plurality of key encrypted and stored residual images of different resolutions by iterating steps i, ii, iii, and iv where the input to the operation of step i is the lower resolution image formed in the previous iteration step i and wherein each lower resolution image is stored; and
vi.controlling the formation of a higher resolution image by requiring the use of a key decryptor for accessing the stored residual images.

12. A hierarchical retrieval and decryption method according to claim 11 wherein step vi is comprised of the steps of:
a) retrieving at least one of said key encrypted and stored residual images and one of said lower resolution images;
b) decrypting said at least one of the retrieved key encrypted residual images; and
c) combining the decrypted residual image with said at least one lower resolution image to form a higher resolution image.

13. A hierarchical retrieval and decryption method according to claim 12 and further comprising the steps of:
a) interpolating said at least one lower resolution image to the dimensions of the next higher resolution level image to form a prediction image;
b) retrieving and decrypting with an encryption key the residual image corresponding to said next higher resolution level image; and
c) adding the decrypted residual image to said prediction image to form a higher resolution image for further use.

14. A hierarchical storage and encryption method comprising the steps of:
(a) forming a digital representation of an image;
(b) decomposing said digital representation according to the following steps:
1. lowpass filtering and subsampling said digital representation to form a lower resolution image;
2. interpolating said lower resolution image to the dimensions of the higher resolution image to form a prediction image;
3. subtracting said prediction image from the higher resolution image to form a residual image;
4. compressing, and storing said residual image;
5. creating a second residual image by iterating steps 1, 2, and 3 where the input to the lowpass filtering and subsampled operation of step 1 is the lower resolution image formed in the previous iteration step 1;
6. key encrypting, compressing and storing said second residual image; and
7. creating a plurality of key encrypted, compressed, and stored residual images of different resolutions by iterating steps 1, 2, 3, and 4 where the input to the lowpass filtering and subsampling operation of step 1 is the lower resolution image formed in the previous iteration step 1.

15. A method for reforming the digital representation of an image stored and encrypted according to the method of claim 14 compressing the steps of:
1. interpolating a retrieved lower resolution image to the dimensions of the next higher resolution level image to form a prediction image;
2. retrieving and decrypting with a key, the residual image corresponding to said next higher resolution level;
3. adding decryptor residual image to said prediction image to form a higher resolution image for further use;
4. iterating steps 1-3 for each remaining residual image of step (b).

16. A hierarchical storage and encryption method comprising the steps of:
(a) forming a digital representation of an image;
(b) decomposing said digital representation according to the following steps:
1. lowpass filtering and subsampling said digital representation to form a lower resolution image;
2. interpolating or replicating said lower resolution image to the dimensions of the higher resolution image to form a prediction image;
3. subtracting said prediction image from the higher resolution image to form a residual image;
4. key encrypting, compressing and storing said residual image; and
5. creating a second residual image by iterating steps 1, 2, and 3 where the input to the lowpass filtering and subsampled operation of step 1 is the lower resolution image formed in the previous iteration step 1;
6. key encrypting, compressing and storing said residual image; and
7. creating a plurality of key encrypted, compressed and stored residual images of different resolutions by iterating steps 1, 2, 3, and 4 where the input to the lowpass filtering and subsampling operation of step 1 is the lower resolution image formed in the previous iteration step 1;
(c) further decomposing the lowest resolution image formed in (b) into a plurality of lower resolution images according to the following steps:
1. iteratively lowpass filtering and subsampling said image to create one or more lower resolution images; and
2. storing said lower resolution images.

17. A method for controllably reforming higher resolution images encrypted according to the method of claim 16 comprising the steps of:
1. replicating said retrieved image to the dimensions of the next higher resolution level to form a prediction image;
2. retrieving, decrypting with a controlled distribution key, and decompressing the residual image corresponding to said next higher resolution level;
3. adding the decrypted, residual image decompressed to said prediction image to form a higher resolution image for further use
4. iterating these steps 1-3 for each selected key encrypted, compressed residual image of (b).
